Europäisches Patentamt

European Patent Office

Office européen des brevets

(11) Veröffentlichungsnummer: **0 240 574**
**A1**

(12) **EUROPÄISCHE PATENTANMELDUNG**

(21) Anmeldenummer: 86100841.5

(22) Anmeldetag: 22.01.86

(51) Int. Cl.⁴: **G09B 23/02** , G09B 23/10

Die Bezeichnung der Erfindung wurde geändert (Richtlinien für die Prüfung im EPA, A-III, 7.3).

(43) Veröffentlichungstag der Anmeldung:
**14.10.87 Patentblatt 87/42**

(84) Benannte Vertragsstaaten:
**AT CH DE FR GB LI**

(71) Anmelder: **Osterried, Josef**
**Im Riedbrunnen 24**
**D-7401 Rübgarten(DE)**

(72) Erfinder: **Osterried, Josef**
**Im Riedbrunnen 24**
**D-7401 Rübgarten(DE)**

(54) Balkenwaage zur Veranschaulichung von Zahlen, von Operationen mit Zahlen und von Zusammenhängen zwischen Zahlen.

(57) Bei dieser Balkenwaage sind zwei Waagebalken (2) an oder in einem senkrechtstehenden Träger (1) beweglich gelagert. Durch ihre Aufhängung (y) befinden sie sich in stabilem Gleichgewicht. Mit einer oder zwei Verbindungen (4) sind die Waagebalken (2) so miteinander gekoppelt, daß sie bei einseitiger Belastung gegenläufige Bewegung ausführen und so durch die Waagebalken(2) die mathematischen Zeichen <(kleiner als) und >(größer als) gebildet wird. Das Zeichen = (gleich) entsteht bei gleicher Belastung der Balkenhälften. Neben dem Zahlvergleich im Bereich der natürlichen Zahlen(Skizze 1,2 und 3), der negativen Zahlen (Skizze 4 und 7) und der ganzen Zahlen (-unterer Balken der einen Seite mit oberem Balken der anderen Seite-Skizze 6)verschafft diese Balkenwaage Einblick in den Aufbau von Additions-und Subtraktionsgleichungen(Skizze 8, 9 und 10) indem sie genügend voneinander getrennt die Positionen a, b und c einer Gleichung bereitstellt und durch die Bewegung der oberen und unteren Waagebalkenhälften zueinander(Skizze 8) die Verknüpfungszeichen + und - begründet.

Fig.: 1

Skizzen

## Balkenwaage zur Veranschaulichung von Zahlen, von Zusammenhängen zwischen Zahlen durch die Ordnungszeichen < (kleiner als), = (gleich), > (größer als), und zwischen den Zeichen für Additionen + und für Subtraktionen -oder + und - als Vorzeichen von Zahlen.

Die Erfindung bezieht sich auf Lehr-und Lernmittel, die zur Veranschaulichung arithmetischer Grundelemente und Zusammenhänge zwischen diesen verwendet werden.

Balkenwaagen finden seit langer Zeit Verwendung im Unterricht (E. Otto,Rechenwaage und Steckbrett 1967Herder). Sie ermöglichen in begrenztem Umfang Darstellung von mathematischen Zusammenhängen. Insbesondere ist die Aussage, die durch den Einsatz einer Balkenwaage bildhaft wird, nur mit Vorkenntnissen verständlich. Die Aussage = (gleich) und ≠ (ungleich) ist hinreichend deutlich erkennbar. Die Aufteilung des Zeichens ≠ - (ungleich) in die Aussagen <(kleiner als) oder >- (größer als) ist ohne Vorkenntnisse nicht unmißverständlich. Zahlvergleiche zwischen positiven und negativen ; und zwischen negativen Zahlen untereinander sind nicht möglich. Auch die Herleitung der Verknüpfungszeichen + und - ist nur bedingt brauchbar.

Hier will die Erfindung Abhilfe schaffen. Die Erfindung, wie sie in den Ansprüchen gekennzeichnet ist, löst die Aufgabe,ein didaktisch methodisches Gerät zu schaffen, das die Ordnungszeichen < (kleiner als) = (gleich) und > (größer als) zweifelsfrei unterscheidbar macht, das Zahlvergleiche im Bereich der positiven Zahlen, im Bereich der negativen Zahlen und im Bereich der ganzen Zahlen ermöglicht.

Die Erfindung erleichtert den Einblick in Gleichungen und Ungleichungen der Form a o b = c; a o b < c und a o b > c, indem drei Waagebalkenhälften für die Positionen a, b und c einer Gleichung zur Verfügung stehen und dadurch, daß die Verknüpfungszeichen + und - eine anschauliche Begründung erfahren.

Im folgenden wird die Erfindung anhand von Teilzeichnungen und Skizzen , die Wirkungsweise und Einsatzmöglichkeiten erklären, dargestellt.

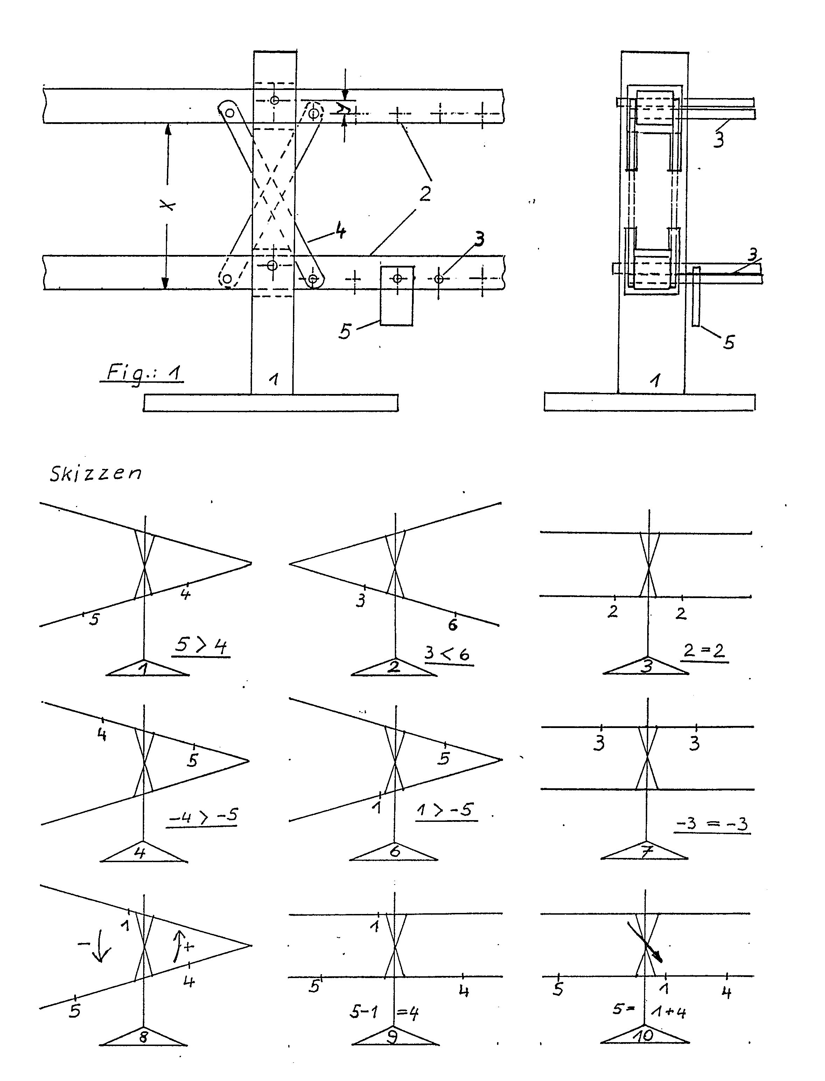

Figur 1 zeigt die Balkenwaage in Vorderansicht und Seitanansicht.

Die Balkenwaage besteht aus:

1. Einem senkrechtstehenden Träger(1) mit zwei Bohrungen in Abstand x

2. Zwei gleichen Waagebalken,(2)die an oder in dem Träger beweglich gelagert sind, und durch ihre Aufhängung bedingt (y), sich in stabilem Gleichgewicht befinden

3. Stiften in den Waagebalken(3) an die Gewichte gehängt werden,

4. ein oder zwei Verbindungsstücke(4), welche die beweglich gelagerten Waagebalken so verbinden, daß sie sich gegenläufig bewegen,

5. Metallteile gleicher Form und gleichen Gewichts(5), welche an die Stifte (3) gehängt werden.

Durch die Verbindung des oberen mit dem unteren Waagebalken wie in Skizze 1 dargestellt, stellt sich das Zeichen < (kleiner als) > (größer als) in seiner korrekten mathematischen Schreibweise ein, wenn die Balkenhälften des unteren Balkens ungleichmäßig belastet wer den (Skizze 1). Der größere Wert liegt dort, wo das Zeichen geöffnet ist (Skizze 1 und 2). Die exakte Schreibweise des Gleichheitszeichens ist durch die beiden Balken gegeben, wenn der untere Waagebalken gleich auf beiden Seiten belastet wird (Skizze 3). Die Belastung des unteren Waagebalkens ergibt den Vergleich von natürlichen Zahlen $\geq 0$ (Skizze 1-3).

Wenn die Balkenhälfte des einen Waagebalkens mit der gegenüberliegenden Balkenhälfte des anderen Waagebalkens verwendet wird, so ist der Vergleich zwischen positiven und negativen Zahlen möglich. Positive Zahlen befinden sich dabei auf dem unteren, negative Zahlen auf dem oberen Waagebalken (Skizze 6).

Der Vergleich negativer Zahlen erfolgt auf den Hälften des oberen Waagebalkens (Skizze 4 und7).

Wird bei den Skizzen 1 und 2 unter Zuhilfenahme des oberen Waagebalkens der Ausgleich der beiden Zahlen hergestellt, so ergibt sich eine Bewegung , die auf der einen Seite der Waage den Abstand zwischen den beiden Balkenhälften verringert und gleichzeitig auf der anderen Seite den Abstand der beiden Balkenhälften vergrößert. Bei Skizze 8 wird der Ausgleich auf dem oberen Waagebalken auf der linken Seite (bei der Zahl 5) bewirkt. Das Gewicht 1 löst die Balkenbewegung aus. Dabei verringert sich der Abstand der beiden linken Balkenhälften. Der Wert 5 wird um 1 verkürzt. Dadurch ist das Minuszeichen begründet. Gleichzeitig vergrößert sich der Abstand der beiden Balkenhälften auf der rechten Seite. Der Wert 4 erfährt eine Vergrößerung um 1. Dadurch ist das Pluszeichen begründet (Skizze 8).

Der jetzige Zustand der Balkenwaage (Skizze 9)zeigt die Positionen a, b und c einer Gleichung deutlich unterscheidbar. Der Zusammenhand zwischen Addition und Subtraktion wird auch dadurch sichtbar, daß beide Gleichungen 5-1 = 4 und 5 = 1 + 4 gleichzeitig sichtbar sind. Der obere Waagebalken (negative Zahlen) ist durch die Verbindungsstücke (4) additiv mit der unteren rechten Balkenhälfte verbunden, was der Vergleich von Skizze 9 und 10 zeigt. Damit ist der Zusammenhang von negativen Zahlen und dem Minuszeichen hergestellt.

## Ansprüche

1. Balkenwaage zur Veranschaulichung von Zahlen, von Zusammenhängen zwischen Zahlen durch die Ordnungszeichen <(kleiner als), = (gleich), >(größer als), und zwischen den Zeichen für Addition + und für die Subtraktion-oder + und - als Vorzeichen von Zahlen, bestehend aus einem senkrechtstehenden Träger(1) mit zwei Bohrungen im Abstand x, zwei identischen Waagebalken(2), die an oder in dem Träger beweglich gelagert sind und durch ihre Aufhängung bedingt , sich in stabilem Gleichgewicht befindet (y), Stiften in den Waagebalken(3) an die Gewichte gehängt werden, einem oder zwei Verbindungsstücken (4), welche die beweglich gelagerten Waagebalken so verbinden, daß sie sich gegenläufig bewegen und Metallteilen gleicher Form und gleichen Gewichts(5) welche an die Stifte (3) gehängt werden gekennzeichnet dadurch, daß die beiden Balken der Waage übereinanderhängend bei entsprechender Belastung der Balkenhälften die matheematischen Zeichen < (kleiner als) = (gleich) und > (größer als) in korrekter Schreibweise widergeben, Zahlvergleiche im Bereich der positiven Zahlen, im Bereich der negativen Zahlen und im Bereich der ganzen Zahlen ermöglichen, den Zusammenhang von Addition und Subtraktion sowie den Zusammenhang der Rechenzeichen + und - sowie der Vorzeichen + und - verdeutlichen und durch Einbeziehung des zweiten Waagebalkens die Positionen a, b und c einer Gleichung schaffen.

2. Balkenwaage nach Patentanspruch 1, bei der die beiden Waagebalken (2) durch ein oder zwei Verbindungsstücke (4) so verbunden sind, daß sie gegenläufige Bewegungen ausführen, wenn sie einseitig belastet werden.

Fig.: 1

Skizzen

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 000 114   (K. ORLOV)<br>* Insgesamt *<br><br>--- | 1 | G 09 B   23/02<br>G 09 B   23/10 |
| A | US-A-3 486 244   (J. HORN)<br>* Spalte 4, Patentanspruch 1 *<br><br>----- | 1 | |

|  |  |
|---|---|
| | RECHERCHIERTE SACHGEBIETE (Int. Cl.4) |
| | G 09 B<br>A 63 F |

Der vorliegende Recherchenbericht wurde für alle Patentansprüche erstellt.

| Recherchenort<br>DEN HAAG | Abschlußdatum der Recherche<br>10-09-1986 | Prüfer<br>ODGERS M.L. |
|---|---|---|